# EUROPEAN PATENT APPLICATION

(11) **EP 4 492 746 A1**
(43) Date of publication of application: **15.01.2025**
(21) Application number: 23765952.9
(22) Date of filing: 06.03.2023
(51) Int. Cl.: H04L 45/00

(54) **ROUTING METHOD AND SYSTEM, AND NODE**

(30) Priority: 07.03.2022 CN 202210216687
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: YAO, Huijuan, Beijing 100032 (CN); LIU, Peng, Beijing 100032 (CN); FU, Yuexia, Beijing 100032 (CN); LU, Lu, Beijing 100032 (CN)
(74) Representative: Maiwald GmbH
(86) International application number: PCT/CN2023/079913
(87) International publication number: WO 2023/169374

(57) **Abstract**

Disclosed in the present disclosure are a routing method and system, and a node, the system comprising a first node and a second node, and the method comprising: executing a computing management and control function by means of the first node; and executing a computing routing function by means of the second node.

## Description

### CROSS-REFERENCE TO RELATED APPLICATIONS

The disclosure claims priority to Chinese Patent Application No. 202210216687.7, filed on March 7, 2022, the entire contents of which are incorporated herein by reference.

### TECHNICAL FIELD

The disclosure relates to a field of data communication technologies, and specifically to a routing method, a routing system, and a node.

### BACKGROUND

A computing force network (CFN), also abbreviated as a computing network, is an important technical direction for the future development of information and communication technology. The ultimate goal for computing power-network integration is to achieve integration and symbiosis of the computing network. At present, a computing-aware networking (CAN) architecture has been proposed. Through the CAN architecture, computing resources and computing services of the entire network can be perceivable, controllable, and manageable. However, how to efficiently implement computing routes needs to be improved in the CAN architecture.

### SUMMARY

To solve the above technical problems, the embodiments of the disclosure provide a routing method and a routing system, a node, a chip and a computer-readable storage medium.

According to embodiments of the disclosure, a routing method is applied to a routing system that includes a first node and a second node. The method includes: performing a computing management control function by the first node; and performing a computing routing function by the second node.

According to embodiments of the disclosure, a routing system has a first node and a second node. The first node is configured to perform a computing management control function. The second node is configured to perform a computing route function.

According to embodiments of the disclosure, a node includes: a processor and a memory storing a computer program. The processor is configured to call and run the computer program stored in the memory, to perform any one routing method described above.

According to embodiments of the disclosure, a chip includes: a processor, configured to call and run a computer program from a memory, so that a device equipped with the chip performs any one method described above.

According to embodiments of the disclosure, a computer-readable storage medium has stored a computer program. The computer program enables a computer to perform any one method described above.

Through the technical solution in the embodiments of the disclosure, efficient computing routes can be achieved, then flexible scheduling of computing power can be achieved, and a utilization rate of network resources and computing resources is thus improved.

### BRIEF DESCRIPTION OF THE DRAWINGS

FIG. 1 is a diagram of a CFN.
FIG. 2 is an architecture diagram of a CAN.
FIG. 3 is another architecture diagram of the CAN.
FIG. 4 is an architecture diagram of a computing routing system according to embodiments of the disclosure.
FIG. 5 is a first flowchart of a routing method according to embodiments of the disclosure.
FIG. 6 is a second flowchart of a routing method according to embodiments of the disclosure.
FIG. 7 is a third flow chart of a routing method according to embodiments of the disclosure.
FIG. 8 is a fourth flowchart of a routing method according to embodiments of the disclosure.
FIG. 9 is a fifth flowchart of a routing method according to embodiments of the disclosure.
FIG. 10 is a sixth flowchart of a routing method according to embodiments of the disclosure.
FIG. 11 is a first structure diagram of a node according to embodiments of the disclosure.
FIG. 12 is a second structure diagram of the of a node according to embodiments of the disclosure.
FIG. 13 is a hardware diagram of a node according to embodiments of the disclosure.
FIG. 14 is an architecture diagram of a routing system according to embodiments of the disclosure.
FIG. 15 is a structure diagram of a chip according to embodiments of the disclosure.

### DETAILED DESCRIPTION

Exemplary embodiments of the disclosure will be described in more detail below with reference to the accompanying drawings. Although the exemplary embodiments of the disclosure are shown in the drawings, it should be understood that the disclosure may be implemented in various forms and should not be limited by the embodiments set forth herein. Rather, the embodiments are provided for a thorough understanding of the disclosure and may fully convey the scope of the disclosure to those skilled in the art.

The terms such as "first", "second" or similar used in the description and the claims are only used to distinguish similar objects, rather than describe a specific order or a precedence order. It should be understood that the data used herein may be interchanged where appropriate so that the embodiments of the disclosure described herein may be implemented in an order other than those illustrated or described herein. In addition, terms "include" and "have" and their any variations are intended to cover non-exclusive inclusions. For example, a process, method, system, product, or device, containing a series of steps or units is not limited to the listed steps or units, but may further include steps or units not listed inherent to such process, method, product or device. The term "and/or" in the description and the claims represents at least one of connected objects.

The following description provides examples and does not limit the scope, applicability, or configuration set forth in the claims. Changes may be made to functions and arrangements of the elements discussed without departing from the spirit and scope of the disclosure. Various examples may be properly omitted, replaced, or added with various procedures or components. For example, the described methods may be executed in a different order than those described, and various steps may be added, omitted, or combined. In addition, features described with reference to certain examples may be combined in other examples.

In order to facilitate understanding the technical solutions of the embodiments of the disclosure, the related art for the embodiments of the disclosure are described below. The following related art can be arbitrarily combined with the technical solutions of the embodiments of the disclosure as optional solutions, all of which belongs to the protection scope of the embodiments of the disclosure.

With the development of cloud computing and edge computing, there may be different scales of computing power distributed at different distances close to a user in the future society, and various personalized services are provided for the user via a global network. A sea of ubiquitous computing power is formed, from a hundreds-of-millions-level smart terminal, to a global billion-level home gateway, to thousands of edge clouds with a computing capability brought by future edge computing in each city, to tens of large cloud data centers (DCs) in each country, which accesses the Internet from various places, and forms a development trend that the computing power is deeply integrated with the network.

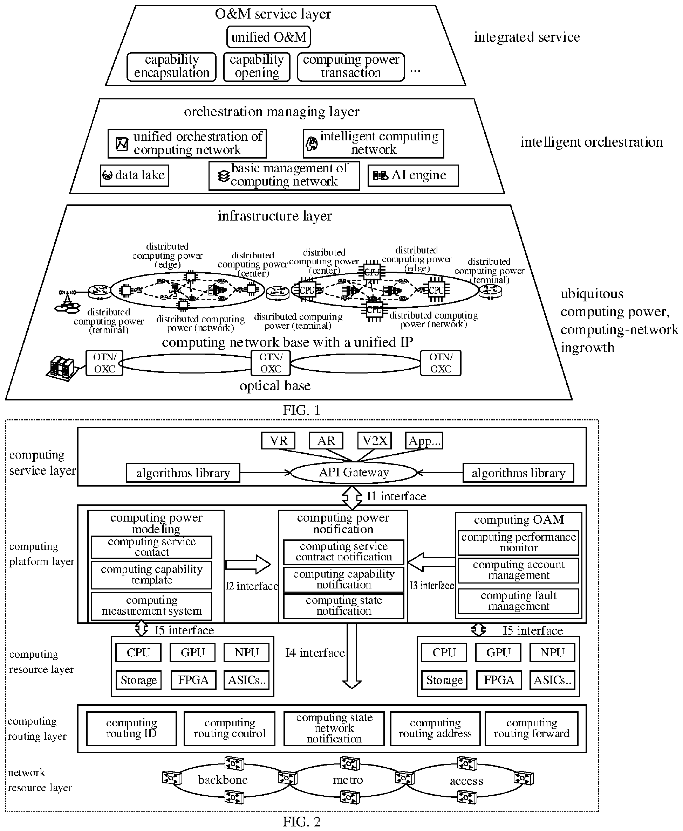

Faced with the development trend of deep computing power-network integration, a CFN (abbreviated as a computing network) technology has been proposed. The CFN is also called computing-aware network (CAN), a computing first network, etc., which is a technique research direction for the deep integration of computing power and network. Faced with the development trend of deep integration of CFNs, relevant research has provided a new interpretation of the concept, connotation, positioning, and significance of CFNs. As shown in FIG. 1, the CFN is a new type of information infrastructure that takes computing as a core, networking as a foundation, and deeply integrates artificial intelligence (AI), Blockchain, Cloud computing, big Data, Network, Edge computing, Internet of things (IoT), which are abbreviated as ABCDNETS. With the goal of "ubiquitous computing power, computing power-network intergrowth, intelligent orchestration, and integrated services", the computing power will be gradually promoted to become a social-level service that is accessed and used immediately and the vision of "computing power everywhere, the network reaching everywhere, and AI all-encompassing" will be achieved. It should be noted that OXC in FIG. 1 is an abbreviation of optical cross-connect, which can be understood as an OXC device, and OTN in FIG. 1 is an abbreviation of optical transport network, which can be understood as an optical transmission network.

The CFN is an important technical direction for the future development of information and communication technology. The ultimate goal for computing power-network integration is to achieve integration and symbiosis of the computing power and the network. CAN architecture has been proposed in the related art, through which computing resources and computing services of the entire network can be perceivable, controllable, and manageable.

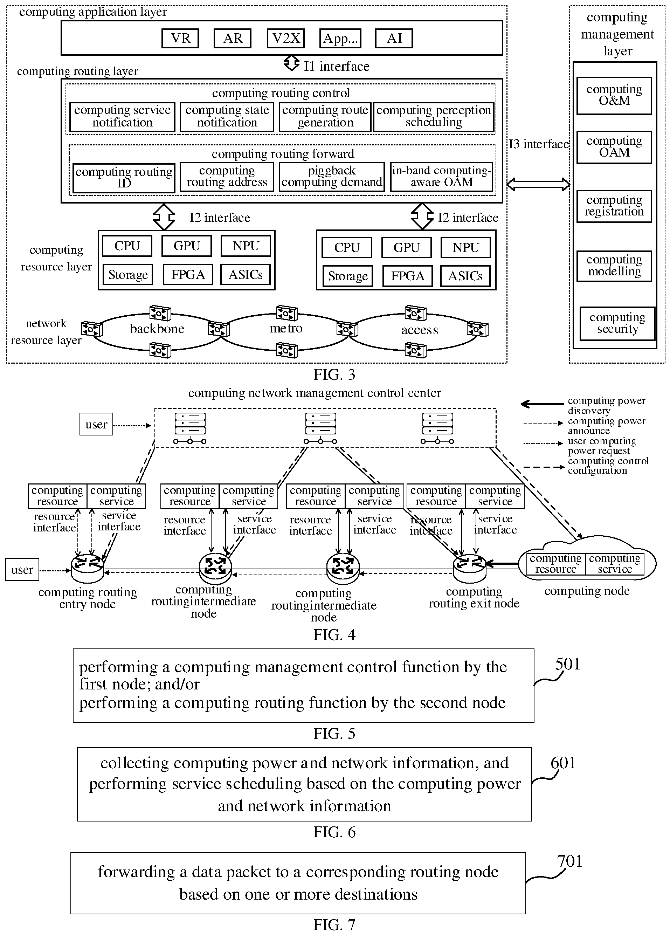

Faced with the development trend of computing power-network integration, a new network architecture for a computing power-network integrated evolution, CAN1.0, has been proposed in the related art, which interconnects dynamically distributed computing resources based on ubiquitous network connections, and perform unified coordinate scheduling of multi-dimensional resources such as network, storage, and computing power, so that a sea of applications are enabled to call in real time computing resources in different places on demand, global optimization of connections and computing power in the network is achieved, and a consistent user experience is thus provided. FIG. 2 and FIG. 3 illustrate some possible CAN architectures. As shown in FIG. 2, the CAN architecture includes a network resource layer, a computing routing layer, a computing resource layer, a computing platform layer and a computing service layer. It should be noted that in FIG. 2, VR stands for Virtual Reality, AR stands for Augmented Reality, V2X stands for Vehicle to Everything, App stands for Application, API stands for Application Programming Interface, and NPU stands for Neural-network Processing Unit. As shown in FIG. 3, the CAN architecture includes a network resource layer, a computing resource layer, a computing routing layer, a computing application layer and a computing management layer.

In the current CAN system architecture, how to efficiently implement computing routes needs to be improved. To this end, the following technical solutions of the embodiments of the disclosure are proposed, which provide a routing method and a routing system applicable to a data communication network. The data communication network can be a future data communication network oriented to the computing power-network integration, or can also be called a CFN, a CAN, a computing power-endogenous network, a computing power-network integration network, or a computing power-networking integrated network.

To facilitate understanding of the technical solutions of the embodiments of the disclosure, the technical solutions of the disclosure are described in detail below through detailed embodiments. The above related art used as optional solutions can be arbitrarily combined with the technical solutions of the embodiments of the disclosure, and they all belong to the protection scope of the embodiments of the disclosure. The embodiments of the disclosure include at least part of the following contents.

### 1) Concepts related to computing power

Computing power: it is a general term for data processing capabilities and services. In a narrow sense, the computing power refers to computing resources composed of a variety of chips and components. In a broad sense, the computing power also includes upper-level services after computing power encapsulation.

Computing power discovery: it refers to that a computing routing node obtains computing power information (such as computing resource information, computing service information, etc.) of the computing node. Optionally, the computing routing node can aggregate and converge the computing power information.

Computing power notification: it refers to a computing routing node notifies computing power information (which can be aggregated computing power information) to another computing routing node.

### 2) Architecture diagram of a computing routing system

FIG. 4 is an architecture diagram of a computing routing system according to the embodiments of the disclosure. The system mainly includes the following parts: a computing network management control center, computing routing nodes, and computing nodes, which are described below respectively.

The computing network management control center is responsible for collecting and maintaining global network information and computing power information, and performing computing control configuration, such as configuring a computing resource aware reporting strategy.

The computing routing node is responsible for the computing power discovery and computing power notification, and making computing power perceivable, schedulable, and manageable. Specifically, the computing routing nodes can be divided into:
a computing routing entry node, being toward a client and responsible for real-time addressing and traffic scheduling of a service;
a computing routing exit node, being toward a server and responsible for querying, aggregating and publishing a service state across the entire network;
computing routing intermediate nodes, being mainly interconnect distributed edge computing nodes to make computing power perceivable, measurable and controllable; and
a computing node, a node that provides data processing and computing services, a specific deployment form of which may include but are not limited to cloud, edge, end, and a computing power-network integrated device node in future.

It should be noted that the "computing network management control center" described in the embodiments of the disclosure may also be called other names, such as a management and control center, a controller, a control center, a management control center, a management center, etc.

It should be noted that the "computing routing node" described in the embodiments of the disclosure may also be called other names, such as a routing node, a forwarding node, a computing forwarding node, etc.

The system shown in FIG. 4 can realize computing routing functions, including computing aware routing (CAR) control function and a CAR forwarding function, which are described below respectively.

Computing routing management control function: the computing network management control center is responsible for this function, and this function mainly includes collecting and maintaining global network information and computing power information (such as computing resource information, computing service information), forming a computing power and network information database, and maintaining a configuration between computing nodes. Optionally, a service request may also be received, computing routing management and control (i.e., computing routing scheduling) is performed based on the service request, the network information, and the computing power information, so as to determine a destination node and a network path, optimize network and computing resources, and provide good user experiences.

Computing routing forwarding function: the computing routing node is responsible for this function, and this function mainly includes message forwarding based on a destination address and a forwarding strategy. Specifically, in an optional implementation, when a computing routing node (which can be a computing routing entry node or a computing routing intermediate node) receives a service request, the computing routing node (which can be a computing routing entry node or a computing routing intermediate node) schedules computing routing, determines a destination address and a network path, and forwards a message according to the destination address and the network path. In another implementation, the computing routing node (which can be a computing routing entry node or a computing routing intermediate node) receives a scheduling result (including the destination address and the network path) from the computing network management control center and forwards a message according to the scheduling result.

The computing routing function shown in FIG. 4 also involves in a computing perception function. The computing perception function refers to perceiving and obtaining the computing power and network information from the network, which includes but not limited to at least one of: network capability information, computing capability information, network state information, computing resource state information, or computing service state information, etc. In specific implementation, the computing perception function can be implemented on a control plane or a data plane, or can be implemented in coordination on the control plane and the data plane. The computing perception function implemented on the control plane can be called centralized perception. The computing perception function implemented on the data plane can be called distributed perception. The computing perception function implemented in coordination on the control plane and the data plane can be called computing perception centralized and distributed in coordination.

On the control plane (also known as a management control plane), in order to achieve computing perception, the computing network management control center serves as a unified database of computing power and network information, supports obtaining network information and computing power information of the entire network, including initialization information and real-time state information, and builds a computing power & network topology map of the entire network based on the information obtained. Specifically, the computing network management control center can directly obtain information (such as computing capacity information, computing resource state information, and computing service state information, etc.) of computing nodes through the computing routing nodes, or obtain information (such as computing capacity information, computing resource state information, and computing service state information, etc.) of computing nodes through a cloud management platform, and then build the computing power & network topology information (that is, a global resource view of computing power and network) of the entire network based on the above information, forming a unified database of computing power and network information.

The unified computing perception through the computing network control center may bring new bottlenecks. To this end, a method for computing perception centralized and distributed in coordination can be adopted. Specifically, on the control plane, the computing network management control center is responsible for perceiving static topology information of computing power and network (such as initialization deployment information of computing power, network and service), and builds the topology information of computing power and network of the entire network based on the above information. On the data plane, the computing routing node is responsible for the perception of dynamic real-time information of the computing power and network (such as real-time resource state information that is strongly related to service scheduling). Specifically, for the real-time resource state information that is strongly related to service scheduling, computing power notifications of real-time state information such as computing services, network resources, and computing resources can be adaptively performed on the data plane based on the deployment of service applications. The perception of the dynamic real-time information of computing power and network is only performed on the data plane. When the computing power notifications are performed, it is necessary to adopt an appropriate computing power notification frequency and computing power notification protocol.

It should be noted that the specific embodiment of computing routes may support a plurality of implementations according to the network deployment.

FIG. 5 is a first flowchart of a routing method according to the embodiments of the disclosure, which is applied to a routing system. The system includes a first node and a second node. The method includes the following step at 501.

At 501, a computing management control function is performed by the first node; and/or a computing routing function is performed by the second node.

In the embodiments of the disclosure, the first node may refer to a management control node (it may also be called by other names, such as a computing network management control center, a computing power management control node, a controller, a control center, a management node, etc.). The disclosure does not limit the name of the first node.

In the embodiments of the disclosure, the second node may be a routing node (the node may also be called by other names, such as a computing routing node, etc.). The disclosure does not limit the name of the second node.

In the embodiments of the disclosure, the computing control function includes at least one of: a computing perception function or a service scheduling function.

Through the computing perception function, the first node collects computing power and network information.

Through the service scheduling function, the first node performs service scheduling based on the computing power and network information.

In some optional implementations, the first node performs both the computing perception function and the service scheduling function.

In some optional implementations, the first node only performs the computing perception function.

In the embodiments of the disclosure, the computing routing function includes at least one of: a computing perception function, a service scheduling function, or a data forwarding function.

The step of performing the computing routing function by the second node includes:
collecting, through the computing perception function, computing power and network information by the second node;
performing, through the service scheduling function, service scheduling by the second node based on the computing power and network information; and
forwarding, through the data forwarding function, a data packet by the second node based on the service scheduling.

In some optional implementations, the second node only performs the data forwarding function.

In some optional implementations, the second node performs the computing perception function, the service scheduling function, and the data forwarding function.

In the above solutions, the computing perception function includes at least one of a computing power discovery function, or a computing power notification function.

The step of collecting, through the computing perception function, computing power and network information by the second node includes:
discovering, through the computing power discovery function, computing power and network information for a third node by the second node; and
notifying, through the computing power notification function, another network node of the computing power and network information discovered by the second node, and/or collecting computing power and network information notified by another network node.

Here, the third node can be called a computing node.

In the embodiments of the disclosure, the routing system supports at least one of: a centralized perception mode, a distributed perception mode, or a perception mode centralized and distributed in coordination.

The centralized perception mode is that computing power and network information is all collected by the first node. The distributed perception mode is that computing power and network are all collected by the second node. The perception mode centralized and distributed in coordination is that a first part of computing power and network information is collected by the first node, and a second part of the computing power and network information is collected by the second node. Here, optionally, the first part is static topology information of computing power and network, and the second part is dynamic real-time information of computing power and network.

In the embodiments of the disclosure, the routing system supports at least one of: a centralized scheduling mode, a distributed scheduling mode, or a scheduling mode centralized and distributed in coordination.

The centralized scheduling mode is that service scheduling is all performed by the first node. The distributed scheduling mode is that service scheduling is all performed by the second node. The scheduling mode centralized and distributed in coordination is that service scheduling is performed by the first node and the second node in coordination.

In some optional implementations, the distributed scheduling mode is performed by one second node; or the distributed scheduling mode is performed by a plurality of second nodes in coordination.

In the above solutions, for the centralized scheduling mode, in some optional implementations, when the first node receives a service request, it determines one or more destination addresses based on the computing power and network information; sends the one or more destination addresses to the second node; and the second node forwards the data packet based on the one or more destinations. Specifically, when one destination address is determined, the data packet is forwarded to a node corresponding to the one destination address; or when a plurality of destination addresses are determined, the data packet is forwarded to a plurality of nodes corresponding to the plurality of destination addresses, and a measurement message is carried in the data packet; measurement response messages returned by the plurality of nodes are received, a destination address is selected from the plurality of destination addresses based on measurement results carried in the measurement response messages, and the data packet is forwarded to a node corresponding to the destination address selected. Further, optionally, the second node generates a routing forwarding table based on the one destination address; and forwards subsequent data packets based on the routing forwarding table.

In the above solutions, for the distributed scheduling mode, in some optional implementations, when the second node receives a service request, it determines one or more destination addresses based on the computing power and network information; and forwards the data packet based on the one or more destinations. Specifically, when one destination address is determined, the data packet is forwarded to a node corresponding to the one destination address; or when a plurality of destination addresses are determined, the data packet is forwarded to a plurality of nodes corresponding to the plurality of destination addresses, and a measurement message is carried in the data packet; measurement response messages returned by the plurality of nodes are received, a destination address is selected from the plurality of destination addresses based on measurement results carried in the measurement response messages, and the data packet is forwarded to the node corresponding to the destination address selected. Further, optionally, the second node generates a routing forwarding table based on the one destination address; and forwards subsequent data packets based on the routing forwarding table.

In the embodiments of the disclosure, the second node supports at least one of: an addressing mode based on a service ID, an addressing mode based on an IP address, or an addressing mode based on a service ID and an IP address.

When the second node supports the addressing mode based on the service ID, the second node determines a forwarding path based on a service ID carried in the service request, and forwards the data packet based on the forwarding path. When the second node supports the addressing mode based on the IP address, the second node determines a forwarding path based on an IP address carried in the service request, and forwards the data packet based on the forwarding path. When the second node supports the addressing mode based on the service ID and the IP address, the second node determines a forwarding path based on a service ID and an IP address carried in the service request, and forwards the data packet based on the forwarding path.

FIG. 6 is a second flowchart of a routing method according to the embodiments of the disclosure, which is applied to a first node, hereinafter referred to as a control node (also referred to as other names, such as a computing network control center, a computing control node, a controller, a control center, a management node, etc.). As shown in FIG. 6, the routing method includes the following step at S601.

At 601, computing power and network information is collected, and service scheduling is performed based on the computing power and network information.

In some optional implementations, the computing power and network information includes at least one of: network capability information, computing capability information, network state information, computing resource state information, or computing service state information.

In some optional embodiments, when the computing power and network information does not include at least one of the network state information, the computing resource state information, or the computing service state information, the at least one of the network state information, the computing resource state information, or the computing service state information is obtained through data plane perception.

In the above solutions, the network capability information and the computing capability information belong to static topology information of computing power and network; the network state information, the computing resource state information and the computing service state information belong to dynamic real-time information of computing power and network. If the management control nodes uniformly collect the above static topology information of computing power and network and dynamic real-time information of computing power and network, this perception mode belongs to the centralized perception mode. If the management control nodes only collect static topology information of computing power and network, while the dynamic real-time information of computing power and network is obtained through data plane perception, then this perception mode belongs to the perception mode centralized and distributed in coordination.

The above computing power and network information is explained below.

Network capability information: it is also network capability information of the network resource layer, which optionally includes but is not limited to a network function ID, network capability information, etc. The network capability information will be notified to the management control node. That is, the management control node perceives/senses the network capability information.

Computing capacity information: it is also computing capacity information of the computing resource layer, which optionally includes but is not limited to a computing node ID, computing capacity information, etc. The computing capacity information is notified to the management control node. That is, the management control node perceives the computing capacity information.

Computing resource state information: it is also computing resource state information of the computing resource layer, which optionally includes but is not limited to a computing power of a central processing unit (CPU) or a graphics processing unit (GPU), a deployment form (physical, virtual), a deployment location (such as a corresponding IP address), a storage capacity, a storage form, etc. The computing resource state information is notified to the routing node (also called the computing routing node). That is, the routing node perceives the computing resource state information.

Computing service state information: it is also computing service state information of the computing resource layer, which optionally includes but is not limited to a service ID, a number of service connections, a service duration, etc. The computing service state information is notified to the routing node (also called the computing routing node). That is, the routing node perceives the computing service state information.

In the embodiments of the disclosure, the management control nodes collect the computing power and network information in the following modes, but are not limited to:
In the mode 1, the management control node receives computing power and network information for a plurality of routing nodes reported by the plurality of routing nodes.

Here, each routing node among the plurality of routing nodes corresponds to one or more computing nodes, and the computing power and network information of the routing node is obtained by the routing node from the corresponding computing node through computing power discovery.

For example, there are 4 routing nodes, namely, routing node R1, routing node R2, routing node R3 and routing node R4. The management control node perceives and obtains the computing power and network information from these 4 routing nodes.

In the mode 2, the management control node receives computing power and network information for the plurality of routing nodes reported by a first routing node, where the first routing node is one of the plurality of routing nodes.

Here, each routing node among the plurality of routing nodes corresponds to one or more computing nodes, and the computing power and network information for the routing node is obtained by the routing node from the corresponding computing node through computing power discovery, and the computing power and network information for routing nodes other than the first routing node among the plurality of routing nodes is sent to the first routing node by the routing node through computing power notification.

For example, there are 4 routing nodes, namely, R1, R2, R3 and R4. Each of R1, R2 and R3 sends its own computing power and network information to R4 through computing power notification. R4 then notifies the aggregated computing power and network information to the management control node.

In the above solutions, different information can be carried in the content of the computing power notification information according to a type of computing power notification. For example, if the type of computing power notification belongs to a computing resource type, the content of the computing power notification information carries the computing resource state information; if the type of computing power notification belongs to a computing service type, the content of the computing power notification information carries the computing service state information.

In some optional implementations, performing computing routing control based on the computing power and network information includes:
when a service request is received, determining one or more destination addresses based on computing power and network information; and
sending the one or more destination addresses to the first routing node.

The one destination address is used by the first routing node to forward the message to the corresponding routing node, and the plurality of destination addresses are used by the first routing node to select at least a part of addresses from the plurality of destination addresses and forward the message to the corresponding routing node.

Here, the first routing node may be a routing access interface and/or a routing intermediate node.

In the above solutions, the management control node is responsible for scheduling, which belongs to a centralized scheduling mode. When the management control node receives the service request, computing power routing control is performed based on the collected information to determine the one or more destination addresses, and further determine a network path, and the one or more destination addresses (optionally, the network path) are sent to the first routing node, so that the first routing node can forward the message according to the one or more destination addresses.

FIG. 7 is a third flowchart of a routing method according to the embodiments of the disclosure, which is applied to a second node, hereinafter referred to as a first routing node (the routing node may also be referred to as other names, such as a computing routing node, etc.). As shown in FIG. 7, the routing method includes the following step at S701.

At 701, a message is forwarded to a corresponding routing node based on one or more destination addresses.

In the embodiments of the disclosure, the first routing node may obtain the one or more destination addresses in the following modes.

In the mode 1, the one or more destination addresses are received from the management control node.

In the mode 1, the management control node is responsible for service scheduling, which corresponds to a centralized scheduling solution.

In the mode 2, when a service request is received, the one or more destination addresses are determined based on the computing power and network information.

For this mode, the first routing node is responsible for service scheduling, which corresponds to a distributed scheduling solution.

In the mode 2, the first routing node needs to obtain the computing power and network information before performing service scheduling. Specifically, the first routing node notifies the routing nodes other than the first routing node among the plurality of routing nodes of its own computing power and network information through computing power notification, and/or obtains the computing power and network information for the routing nodes other than the first routing node among the plurality of routing nodes through computing power notification. Here, each routing node among the plurality of routing nodes corresponds to one or more computing nodes, and the computing power and network information for the routing node is obtained by the routing node from the corresponding computing node through computing power discovery.

In some optional implementations, the computing power and network information includes at least one of: network capability information, computing capability information, network state information, computing resource state information, or computing service state information.

In some optional embodiments, when the computing power and network information does not include at least one of the network state information, the computing resource state information or the computing service state information, the at least one of the network state information, the computing resource state information or the computing service state information is obtained through data plane perception.

In the above solutions, the network capability information and the computing capability information belong to static topology information of computing power and network; the network state information, the computing resource state information and the computing service state information belong to dynamic real-time information of computing power and network. The first routing node only collects static topology information of computing power and network, while dynamic real-time information of computing power and network is obtained through data plane perception.

The above computing power and network information is explained below.

Network capability information: it is also network capability information of the network resource layer, which optionally includes but is not limited to a network function ID, network capability information, etc. The network capability information will be notified to the first routing node. That is, the first routing node perceives the network capability information.

Computing capacity information: it is also computing power capacity information of the computing resource layer, which optionally includes but is not limited to a computing node ID, computing capacity information, etc. The computing capability information is notified to the first routing node. That is, the first routing node perceives the computing capability information.

Computing resource state information: it is also computing resource state information of the computing resource layer, which optionally includes but is not limited to a CPU/GPU computing power, a deployment form (physical, virtual), a deployment location (such as a corresponding IP address), a storage capacity, a storage form, etc. The computing resource state information is notified to the first routing node. That is, the first routing node perceives the computing resource state information.

Computing service state information: it is also computing service state information of the computing resource layer, which optionally includes but is not limited to a service ID, a number of service connections, a service duration, etc. The computing service state information is notified to the first routing node. That is, the first routing node perceives the computing service state information.

In the embodiments of the disclosure, the first routing node supports at least one of an addressing mode based on a service ID, an addressing mode based on an IP address, or an addressing mode based on a service ID and an IP address.

In some optional implementations, the service request carries a service ID. When the first routing node is responsible for service scheduling, the first routing node determines one or more destination addresses based on the service ID, and the computing power and network information.

In some optional implementations, in the case of one destination address, the first routing node forwards the message to a routing node corresponding to the one destination address based on a forwarding strategy.

In some optional implementations, in the case of the plurality of destination addresses, the first routing node forwards the message to a plurality of routing nodes corresponding to the plurality of destination addresses based on a forwarding strategy, and carries a measurement message in the message; receives measurement response messages returned by the plurality of routing nodes, selects at least a part of addresses from the plurality of destination addresses based on measurement results carried in the measurement response messages, and generates a routing forwarding table based on the selected destination addresses; and forwards the message to the corresponding routing node based on the routing forwarding table.

Here, when the at least part of the addresses includes one address, it corresponds to a solution without branching, that is, the message needs to be forwarded to the one routing node. When the at least part of the addresses includes a plurality of addresses, a corresponding solution with branching is provided, that is, the message needs to be forwarded to a plurality of routing nodes. Specifically, a decision may be made in combination with a branching strategy to select at least part of the addresses from the plurality of destination addresses.

In the embodiments of the disclosure, the first routing node is a routing entry node and/or a routing intermediate node. In the case where the first routing node is a routing entry node, the above solution can enable the routing entry node to perform service scheduling. In the case where the first routing node is a routing intermediate node, or a routing entry node and a routing intermediate node, the above solution can perform service scheduling at a routing node or a routing entry node.

The technical solutions in the embodiments of the disclosure are illustrated below in combination with specific application examples. It should be noted that the following application examples are only used for illustration and do not limit the technical solutions in the embodiments of the disclosure.

### Application Example 1

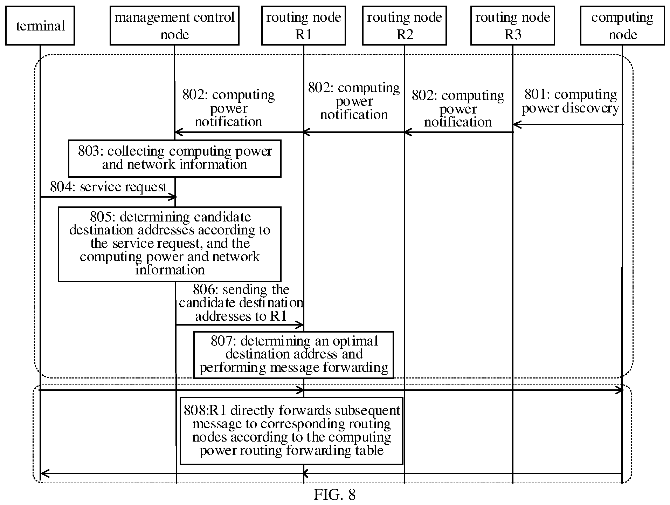

FIG. 8 is a fourth flowchart of a routing method according to embodiments of the disclosure, which involves in a terminal, a management control node, a routing node R1, a routing node R2, a routing node R3, and a computing node. R1 faces the terminal and serves as a routing entry node. R2 serves as a routing intermediate node. R3 is connected to the computing node and serves as a routing exit node. The management control node is not only responsible for maintaining a database of computing power and network information within a scheduling area, but also for performing service scheduling. As shown in FIG. 8, the following steps are included.

At 801, R3 obtains information (called computing power and network information) about the computing node through a computing power discovery.

At 802, R3, R2, and R1 send the computing power and network information through a computing power notification.

At 803, the management control node collects the computing power and network information. Here, the management control node is responsible for obtaining the computing power and network information (such as network information, computing power information) for each routing node, so as to determine available computing capability and network capability. The management control node can be responsible for obtaining the computing power and network information in the following ways: 1) the management control node directly obtains the computing power and network information from each routing node on the path; or 2) one routing node obtains computing power and network information for a plurality of routing nodes on the path and reports the same to the management control node in a unified manner. The reporting strategy can be reported through periodic reporting or event-triggered updates.

At 804, the terminal sends a service request to the management and control node.

At 805, the management and control node determines two candidate destination addresses (SIP1 and SIP2) according to the service request, and the computing power and network information.

Here, the two candidate destination addresses are taken as an example for description, which is not limited in the disclosure, and a number of candidate destination addresses may also be 1 or other number value.

At 806, the management control node sends the two candidate destination addresses (SIP1 and SIP2) to R1.

For the above steps 804 to 806, after receiving the service request, the management control node determines one or more optional destination addresses based on the collected computing power and network information and the service ID in the service request, and sends these optional destination addresses to R1. Optionally, a branching strategy may also be sent to R1.

At 807, R1 determines an optimal destination address from the two candidate destination addresses and performs message forwarding.

Here, after receiving the two candidate destination addresses, R1 forwards the message to corresponding routing nodes according to a forwarding strategy and the two candidate destination addresses. Here, since R1 receives the two candidate destination addresses, R1 can send the message to the two candidate destination addresses and carry computing network measurement messages (e.g., in-band operation, maintenance and management (OAM) messages) in the message, so as to query and measure state information of network resources and computing resources along the path. After receiving the measurement response message, R1 may further determine the optimal destination address and generate a computing routing forwarding table based on the optimal destination address.

At 808, R1 directly forwards subsequent message to the corresponding routing nodes according to the computing power routing forwarding table.

### Application Example 2

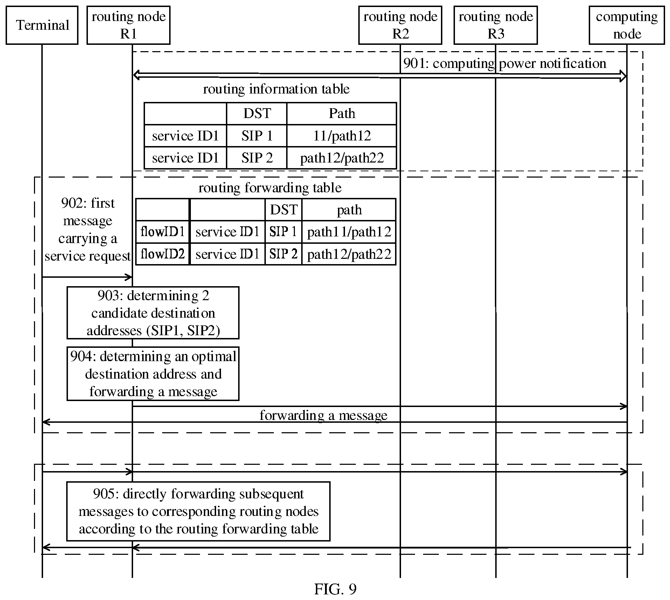

FIG. 9 is a fifth flowchart of a routing method according to embodiments of the disclosure, which involves in a terminal (the corresponding IP is called CIP), a routing node R1, a routing node R2, a routing node R3, and a computing node. R1 faces the terminal and serves as a routing entry node. R2 serves as a routing intermediate node. R3 is connected to the computing node (the corresponding IP is called SIP 1) and serves as a routing exit node. The difference between application example 2 and application example 1 lies in that service scheduling is performed only on R1, and the management control node only performs maintenance of the computing power and network information and no longer performs the service scheduling. As shown in FIG. 9, the following steps are included.

At 901, R1 obtains computing power and network information through a computing power notification.

Here, the computing power notification may be performed among the routing nodes, so that each routing node notifies the other routing nodes of its own computing power and network information. Optionally, the routing node can extend and carry the content of the computing power notification via a Border Gateway Protocol (BGP)/Interior Gateway Protocol (IGP) protocol. The content of the computing power notification is the computing power and network information, which may include, for example, network capability information and computing capability information. That is, only static topology information of computing power and network is carried, while real-time information such as computing resource state information and computing service state information are perceived through a data plane. It should be noted that DST in FIG. 9 is a destination address.

At 902, R1 receives a first message carrying a service request.

Here, the service request includes a service ID1.

At 903, R1 determines two candidate destination addresses (SIP1, SIP2) according to the service ID1 and the obtained computing power and network information.

Here, the two candidate destination addresses are taken as an example for description, which is not limited in the disclosure, and a number of candidate destination addresses may also be 1 or other number value.

At 904, R1 determines an optimal destination address from the two candidate destination addresses and performs message forwarding.

Here, after receiving the two candidate destination addresses, R1 forwards the message to corresponding routing nodes according to a forwarding strategy and the two candidate destination addresses. Here, since R1 receives the two candidate destination addresses, R1 can send the message to the two candidate destination addresses and carry computing network measurement messages (e.g., in-band OAM messages) in the message, so as to query and measure state information of network resources and computing resources along the path. After receiving the measurement response message, R1 may further determine the optimal destination address and generate a computing routing forwarding table based on the optimal destination address.

At 905, R1 directly forwards subsequent message to the corresponding routing nodes according to the computing power routing forwarding table.

### Application Example 3

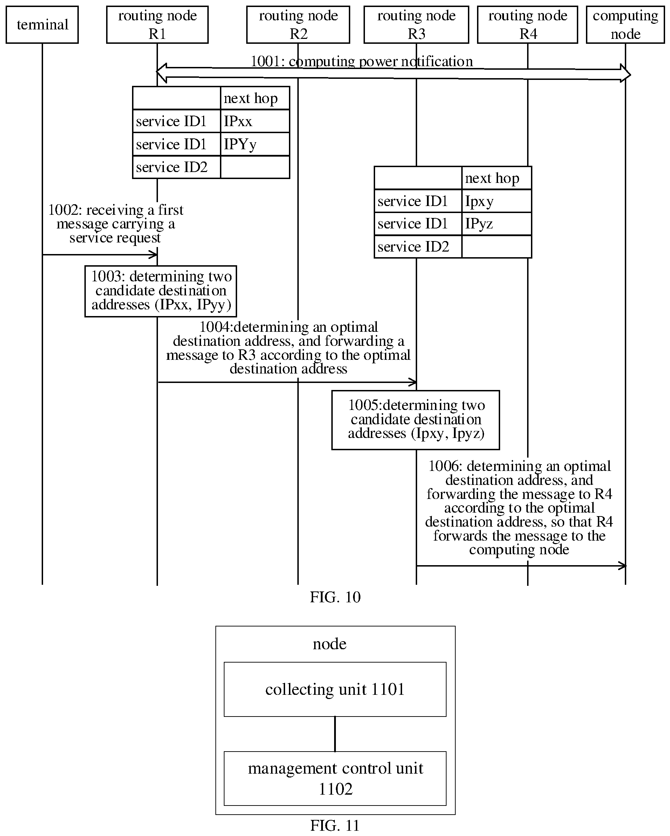

FIG. 10 is a sixth flowchart of a routing method according to embodiments of the disclosure, which involves in a terminal (the corresponding IP is called CIP), a routing node R1, a routing node R2, a routing node R3, a routing node R4 and a computing node. R1 faces the terminal and serves as a routing entry node. R2 and R3 serve as routing intermediate nodes. R4 is connected to the computing node and serves as a routing exit node. The difference between application example 3 and application example 2 lies in that not only the routing entry node (R1) supports service scheduling, but also the routing intermediate node (such as R3) can optionally support service scheduling and a plurality of addressing modes such as an IP addressing and/or a service ID addressing. That is, selecting and scheduling the optimal destination IP is distributed among the routing nodes in the network, so as to avoid processing bottlenecks at the routing entry node. At the same time, in order to cope with dynamic features of the service, address mapping is implemented at the place closest to the destination service node in the network to provide a timely routing mechanism and achieve the optimal service experience. As shown in FIG. 10, the following steps are included.

At 1001, computing power and network information is obtained through a computing power notification among the routing nodes.

Here, the computing power notification may be performed among the routing nodes, so that each routing node notifies the other routing nodes of its own computing power and network information. Optionally, the routing node can extend and carry the content of the computing power notification via a BGP/IGP protocol. The content of the computing power notification is the computing power and network information, which may include, for example, network capability information and computing capability information. That is, only static topology information of computing power and network is carried, while real-time information such as computing resource state information and computing service state information are perceived through a data plane.

At 1002, R1 receives a first message carrying a service request.

Here, the service request includes a service ID1.

At 1003, R1 determines two candidate destination addresses (IPxx, IPyy) according to the service ID1 and the obtained computing power and network information.

Here, the two candidate destination addresses are taken as an example for description, which is not limited in the disclosure, and a number of candidate destination addresses may also be 1 or other number value.

At 1004, R1 determines an optimal destination address the from two destination addresses, and forwards a message to R3 according to the optimal destination address.

At 1005, R3 determines two candidate destination addresses (IPxy, IPyz) according to the service ID1 and the obtained computing power and network information.

Here, the two candidate destination addresses are taken as an example for description, which is not limited in the disclosure, and a number of candidate destination addresses may also be 1 or other number value.

At 1006, R3 determines an optimal destination address from the two candidate destination addresses, forwards the message to R4 according to the optimal destination address. R4 forwards the message to the computing node.

The technical solutions in the embodiments of the disclosure supports the computing power discovery, the computing perception and notification, the computing power routing and addressing, achieves cross-domain computing power routing basic functions through controller expansion or distributed routing protocol enhancement. Flexible scheduling of computing power can be achieved through joint scheduling of computing power and network, thereby improving the utilization rate of network resources and computing resources. In addition, according to the network deployment situation, a plurality of computing power notifications and computing routing solutions are supported, facilitating the implementation and deployment of computing routing solutions.

FIG. 11 is a first structure diagram of a node according to embodiments of the disclosure. The node is a first node, as shown in FIG. 11, including a collecting unit 1101 and a management control unit 1102.

The collecting unit 1101 is configured to collect computing power and network information.

The management control unit 1102 is configured to perform service scheduling based on the computing power and network information.

In some optional implementations, the collecting unit 1101 is configured to receive computing power and network information for a plurality of routing nodes reported by a plurality of routing nodes.

In some optional embodiments, each routing node among the plurality of routing nodes corresponds to one or more computing nodes, and computing power and network information for the routing node is obtained by the routing node from a corresponding computing node through a computing power discovery.

In some optional implementations, the collecting unit 1101 is configured to receive computing power and network information for a plurality of routing nodes reported by a first routing node, where the first routing node is one of the plurality of routing nodes.

In some optional embodiments, each routing node among the plurality of routing nodes corresponds to one or more computing nodes, and computing power and network information for the routing node is obtained by the routing node from a corresponding computing node through a computing power discovery, and computing power and network information for routing nodes other than the first routing node among the plurality of routing nodes is sent by the routing nodes to the first routing node through a computing power notification.

In some optional embodiments, the management control unit 1102 is configured to determine one or more destination addresses based on computing power and network information when receiving a service request; and send the one or more destination addresses to the first routing node. The one destination address is configured for the first routing node to forward a message to a corresponding routing node, and the plurality of destination addresses are configured for the first routing node to select at least a part of destination addresses therefrom and forward the message to the corresponding routing node.

In some optional implementations, the computing power and network information includes at least one of: network capability information, computing capability information, network state information, computing resource state information, or computing service state information.

In some optional embodiments, when the computing power and network information does not include at least one of the network state information, the computing resource state information, or the computing service state information, the at least one of the network state information, the computing resource state information or the computing service state information is obtained through data plane perception.

Those skilled in the art should understand that the functions implemented by each unit in the node shown in FIG. 11 can be understood by referring to the relevant description of the aforementioned methods. The functions of each unit in the node shown in FIG. 11 may be implemented by a program running on a processor, or may be implemented by a specific logic circuit.

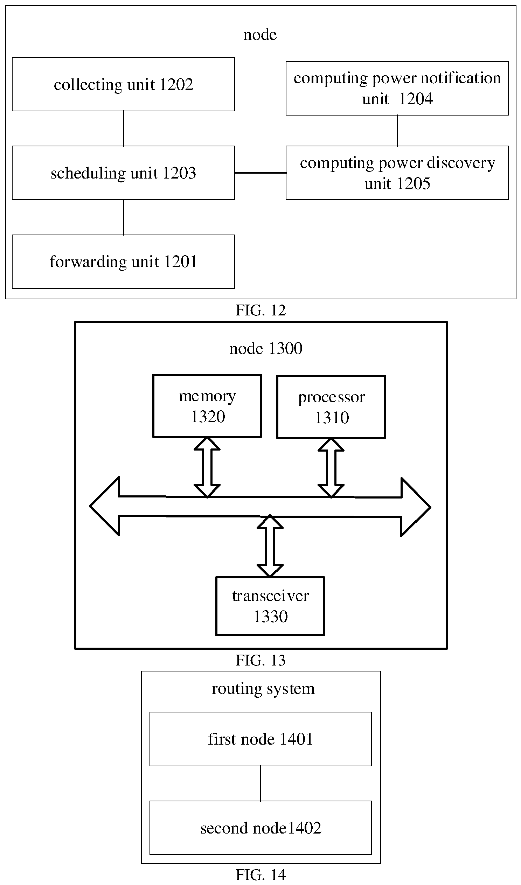

FIG. 12 is a second structure diagram of the of a node according to embodiments of the disclosure. The node is a second node. As shown in FIG. 12, the node includes a forwarding unit 1201.

The forwarding unit 1201 is configured to forward a message to a corresponding routing node based on one or more destination addresses.

In some optional implementations, the node further includes a collecting unit 1202.

The collecting unit 1202 is configured to receive the one or more destination addresses from a management control node.

In some optional implementations, the node further includes a scheduling unit 1203.

The scheduling unit 1203 is configured to determine the one or more destination addresses based on computing power and network information when receiving a service request.

In some optional implementations, the node further includes a computing power notification unit 1204.

The computing power notification unit 1204 is configured to notify routing nodes other than a first routing node among the plurality of routing nodes of its own computing power and network information through a computing power notification, and/or to obtain computing power and network information for routing nodes other than a first routing node among the plurality of routing nodes through a computing power notification.

In some optional implementations, the node further includes a computing power discovery unit.

The computing power discovery unit 1205 is configured to obtain computing power and network information from a corresponding computing node through a computing power discovery.

In some optional implementations, the computing power and network information includes at least one of: network capability information, computing capability information, network state information, computing resource state information, or computing service state information.

In some optional embodiments, when the computing power and network information does not include at least one of the network state information, the computing resource state information, or the computing service state information, the at least one of the network state information, the computing resource state information, or the computing service state information is obtained through data plane perception.

In some optional implementations, the service request carries a service ID. The scheduling unit 1203 is configured to determine the one or more destination addresses based on the service ID and the computing power and network information.

In some optional implementations, the forwarding unit 1201 is configured to, in the case of one destination address, forward the message to a routing node corresponding to the one destination address based on a forwarding strategy.

In some optional implementations, the forwarding unit 1201 is configured to, in the case of a plurality of destination address, forward the message to a plurality of routing nodes corresponding to the plurality of destination addresses based on a forwarding strategy, and carry measurement messages in the message; receive measurement response messages returned by the plurality of routing nodes, select at least a part of addresses from the plurality of destination addresses based on measurement results carried in the measurement response messages, and generate a routing forwarding table based on the selected destination addresses; and forward the message to corresponding routing nodes based on the routing forwarding table.

In some optional implementations, the measurement result includes at least one of computing resource state information, or computing service state information.

In some optional implementations, the first routing node supports at least one of an addressing mode based on a service ID, an addressing mode based on an IP address, or an addressing mode based on a service ID and an IP address.

In some optional implementations, the first routing node is a routing entry node and/or a routing intermediate node.

Those skilled in the art should understand that the functions implemented by each unit in the node shown in FIG. 12 can be understood by referring to the relevant description of the aforementioned method. The functions of each unit in the node shown in FIG. 12 may be implemented by a program running on a processor, or may be implemented by a specific logic circuit.

FIG. 13 is a hardware diagram of a node according to embodiments of the disclosure. The node may be the first node or the second node in the above solutions. The node 1300 shown in FIG. 13 includes a processor 1310. The processor 1310 may call and run a computer program from a memory to implement the methods in the embodiments of the disclosure.

Optionally, as shown in FIG. 13, the node 1300 may further include a memory 1320. The processor 1310 may call and run a computer program from the memory 1320 to implement the methods in the embodiments of the disclosure.

The memory 1320 may be a separate device independent of the processor 1310, or may be integrated into the processor 1310.

Optionally, as shown in FIG. 13, the node 1300 may further include a transceiver 1330, and the processor 1310 may control the transceiver 1330 to communicate with other devices. Specifically, the transceiver may send information or data to other devices, or receive information or data from other devices.

The transceiver 1330 may include a transmitter and a receiver. The transceiver 1330 may further include an antenna, and there may be may be one or more antennas.

Optionally, the node 1300 may specifically be the routing node in the embodiments of the disclosure, and the node 1300 may implement the corresponding processes implemented by the routing node in various methods of the embodiments of the disclosure, which will not be described in detail here for the sake of brevity.

Optionally, the node 1300 may specifically be the management control node in the embodiments of the disclosure, and the node 1300 may implement the corresponding processes implemented by the management control node in various methods of the embodiments of the disclosure, which will not be described in detail here for the sake of brevity.

The disclosure also provides a routing system. As shown in FIG. 14, the system includes a first node 1401 and a second node 1402.

The first node 1401 is configured to perform a computing management control function.

The second node 1402 is configured to perform a computing routing function.

In some optional implementations, the computing power control function includes at least one of a computing perception function or a service scheduling function.

The computing perception function is configured for the first node 1401 to collect computing power and network information;

The service scheduling function is configured for the first node 1401 to perform service scheduling based on the computing power and network information.

In some optional implementations, the computing routing function includes at least one of a computing perception function, a service scheduling function, or a data forwarding function.

The computing perception function is configured for the second node 1402 to collect computing power and network information.

The service scheduling function is configured for the second node 1402 to perform service scheduling based on computing power and network information.

The data forwarding function is configured for the second node 1402 to forward a data packet based on the service scheduling.

In some optional implementations, the computing perception function includes at least one of a computing power discovery function, or a computing power notification function.

The computing power discovery function is configured for the second node 1402 to discover computing power and network information for a third node.

The computing power notification function is configured for the second node 1402 to notify another network node of the computing power and network information discovered by the second node, and/or collect computing power and network information notified by another network node.

In some optional implementations, the routing system supports at least one of a centralized perception mode, a distributed perception mode, or a perception mode centralized and distributed in coordination.

In some optional implementations, the centralized perception mode is that computing power and network information is all collected by the first node 1401.

In some optional implementations, the distributed perception mode is that computing power and network are all collected by the second node 1402.

In some optional implementations, the perception mode centralized and distributed in coordination is that a first part of computing power and network information is collected by the first node 1401, and a second part of the computing power and network information is collected by the second node 1402.

In some optional implementations, the first part is static topology information of computing power and network, and the second part is dynamic real-time information of computing power and network.

In some optional implementations, the routing system supports at least one of: a centralized scheduling mode, a distributed scheduling mode, or a scheduling mode centralized and distributed in coordination.

In some optional implementations, the centralized scheduling mode is that service scheduling is all performed by the first node 1401 .

In some optional implementations, the distributed scheduling mode is that service scheduling is all performed by the second node 1402 .

In some optional implementations, the distributed scheduling is performed by one second node 1402; or, the distributed scheduling is performed by a plurality of second nodes 1402 in coordination.

In some optional implementations, the scheduling mode centralized and distributed in coordination is that service scheduling is performed by the first node 1401 and the second node 1402.

In some optional embodiments, for the centralized scheduling mode, the first node 1401 is configured to when a service request is received, determine one or more destination addresses based on computing power and network information, and send the one or more destination addresses to the second node 1402; and the second node 1402 is configured to forward a data packet based on the one or more destinations.

In some optional embodiments, for the distributed scheduling mode, the second node 1402 is configured to when a service request is received, determine one or more destination addresses based on computing power and network information, and forward a data packet based on the one or more destinations.

In some optional implementations, the second node 1402 is specifically configured to: when one destination address is determined, forward the data packet to a node corresponding to the destination address; or when a plurality of destination addresses are determined, forward the data packet to nodes corresponding to the plurality of destination addresses, and carry a measurement message in the data packet; receive measurement response messages returned by the nodes, select a destination address from the plurality of destination addresses based on measurement results carried in the measurement response messages, and forward the data packet to a node corresponding to the destination address selected.

In some optional implementations, the second node 1402 is further configured to generate a routing forwarding table based on the destination address; and forward subsequent data packets based on the routing forwarding table.

In some optional implementations, the second node 1402 supports at least one of: an addressing mode based on a service ID, an addressing mode based on an IP address, or an addressing mode based on a service ID and an IP address.

In some optional implementations, when the second node 1402 supports the addressing mode based on the service ID, the second node 1402 is specifically configured to determine a forwarding path based on a service ID carried in the service request, and forward the data packet based on the forwarding path.

In some optional implementations, when the second node 1402 supports the addressing mode based on the IP address, the second node 1402 is specifically configured to determine a forwarding path based on an IP address carried in the service request, and forward the data packet based on the forwarding path.

In some optional implementations, when the second node 1402 supports the addressing mode based on the service ID and the IP address, the second node 1402 is specifically configured to determine a forwarding path based on a service ID and an IP address carried in a service request, and forward a data packet based on the forwarding path.

In some optional implementations, the system further includes: a database of computing power and network information for storing the computing power and network information collected by the management control node.

It should be noted that, although FIG. 14 illustrates one second node, the number of second nodes included in the routing node is not limited to one, but may be more than one, which is not limited in the disclosure.

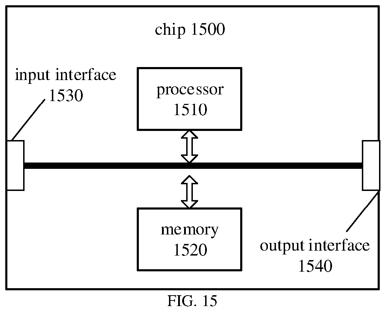

FIG. 15 is a structure diagram of a chip according to an embodiment of the disclosure. The chip 1500 shown in FIG. 15 includes a processor 1510, which may call and run a computer program from a memory to implement the method in the embodiment of the disclosure.

Optionally, as shown in FIG. 15 , the chip 1500 may further include a memory 1520. The processor 1510 may call and run a computer program from the memory 1520 to implement the method in the embodiment of the disclosure.

The memory 1520 may be a separate device independent of the processor 1510, or may be integrated into the processor 1510 .

Optionally, the chip 1500 may further include an input interface 1530. The processor 1510 may control the input interface 1530 to communicate with other devices or chips, and specifically, may obtain information or data sent by other devices or chips.

Optionally, the chip 1500 may further include an output interface 1540. The processor 1510 may control the output interface 1540 to communicate with other devices or chips, and specifically, may output information or data to other devices or chips.

Optionally, the chip may be applied to the routing node in the embodiments of the disclosure, and the chip may implement the corresponding processes implemented by the routing node in the methods of the embodiments of the disclosure, which will not be described in detail here for the sake of brevity.

Optionally, the chip may be applied to the control node in the embodiments of the disclosure, and the chip may implement the corresponding processes implemented by the control node in the methods of the embodiments of the disclosure, which will not be described here for the sake of brevity.

It should be understood that the chip mentioned in the embodiments of the disclosure may also be referred to as a system-level chip, a system chip, a chip system or a system-on-chip (SOC) chip, etc.

It should be understood that the processor in the embodiments of the disclosure may be an integrated circuit chip with a signal processing capability. In the implementation process, each step of the above method embodiments can be completed by an integrated logic circuit of hardware in the processor or an instruction in a software form. The above-mentioned processor can be a general-purpose processor, a digital signal processor (DSP), an application specific integrated circuit (ASIC), a field programmable gate array (FPGA) or other programmable logic devices, discrete gate or transistor logic devices, and discrete hardware components. The various methods, steps and logic block diagrams disclosed in the embodiments of the disclosure may be implemented or executed. The general purpose processor may be a microprocessor, or any conventional processor, or the like. The steps of the method disclosed in the embodiments of the disclosure may be directly implemented as being executed by a hardware decoding processor, or may be implemented as being executed by a combination of hardware and software modules in the decoding processor. The software module may be located in a random access memory (RAM), a flash memory, a read-only memory (ROM), a programmable read-only memory (PROM), or an electrically erasable programmable memory (EPROM), a register, or other storage media well known in the art. The storage medium is located in a memory, and the processor reads information in the memory and completes the steps of the above methods in combination with its hardware.

It may be understood that the memory in the embodiments of the disclosure may be a volatile memory or a non-volatile memory, or may include both the volatile memory and the non-volatile memory. The non-volatile memory may be a ROM, a PROM, an EPROM, an electrically erasable programmable read-only memory (EEPROM) or a flash memory. The volatile memory may be a RAM, which is used as an external cache memory. By way of example and not limitation, many forms of RAM are available, such as a static random access memory (SRAM), a dynamic random access memory (DRAM), a synchronous dynamic random access memory (SDRAM), a double data rate SDRAM (DDR SDRAM), an enhanced DRAM (ESDRAM), a Synchlink DRAM (SLDRAM), and a direct RAMbus RAM (DR RAM). It should be noted that the memory of the systems and methods described herein is intended to include but is not limited to, the above memories and any other suitable types of memory.

It should be understood that the above-mentioned memory is exemplary but not restrictive. For example, the memory in the embodiments of the disclosure can also be a SRAM, a DRAM, a SDRAM, a DDR SDRAM, a ESDRAM, a SLDRAM and a DR RAM, etc. That is, the memory in the embodiments of the disclosure is intended to include but is not limited to, the above memories and any other suitable types of memory.

The embodiments of the disclosure also provide a computer-readable storage medium for storing a computer program. Optionally, the computer-readable storage medium may be applied to the routing node in the embodiments of the disclosure, and the computer program enables the computer to execute the corresponding processes implemented by the routing node in the various methods of the embodiments of the disclosure, which will not be described in detail here for the sake of brevity.

Optionally, the computer-readable storage medium may be applied to the control node in the embodiments of the disclosure, and the computer program enables the computer to execute the corresponding processes implemented by the control node in the various methods of the embodiments of the disclosure, which will not be described in detail here for the sake of brevity.

The embodiment of the disclosure also provides a computer program product, including computer program instructions.

Optionally, the computer program product may be applied to the routing node in the embodiments of the disclosure, and the computer program instructions enable the computer to execute the corresponding processes implemented by the routing node in the methods of the embodiments of the disclosure, which will not be described in detail here for the sake of brevity.

Optionally, the computer program product may be applied to the control node in the embodiments of the disclosure, and the computer program instructions enable the computer to execute the corresponding processes implemented by the control node in the various methods of the embodiments of the disclosure, which will not be described in detail here for the sake of brevity.

The embodiment of the disclosure also provides a computer program.

Optionally, the computer program may be applied to the routing node in the embodiments of the disclosure. When the computer program runs on a computer, the computer executes the corresponding processes implemented by the routing node in the methods of the embodiments of the disclosure, which will not be described in detail here for the sake of brevity.

Optionally, the computer program may be applied to the control node in the embodiments of the disclosure. When the computer program runs on a computer, the computer executes the corresponding processes implemented by the control node in the methods of the embodiments of the disclosure, which will not be described in detail here for the sake of brevity.

Those skilled in the art will appreciate that the units and algorithm steps of each example described in conjunction with the embodiments disclosed herein may be implemented by electronic hardware, or a combination of computer software and electronic hardware. Whether these functions are performed in hardware or software depends on the specific application and design constraints of the technical solutions. Those skilled in the art may use different methods to implement the described functions for each specific application, but such implementation should not be considered as going beyond the scope of the disclosure.

Those skilled in the art may clearly understand that, for the convenience and brevity of description, the specific working processes of the systems, apparatuses and units described above can refer to the corresponding processes in the aforementioned method embodiments, which will not be repeated here.

In several embodiments according to the disclosure, it is to be understood that the disclosed system, apparatus and method may be implemented in other ways. For example, the apparatus embodiments are merely illustrative. For example, the division of units is only a logical function division, but there may be additional division modes during actual implementation. For example, a plurality of units or components may be combined or may be integrated into another system, or some features may be omitted, or not performed. The coupling or direct coupling or communication connection of each other shown or discussed may be an indirect coupling or communication connection via some interfaces, devices, or units, which may be electrical, mechanical or in other forms.

The units described as separate components may or may not be physically separated, and the components shown as units may or may not be physical units, that is, they may be located in one place or distributed over a plurality of network units. Some or all of the units may be selected according to actual needs to achieve the purpose of the solutions in the embodiments.

In addition, each functional unit in each embodiment of the disclosure may be integrated into one processing unit, or may exist physically separately, or two or more units may be integrated into one unit.

If the functions are implemented in the form of software functional units and sold or used as an independent product, they may be stored in a computer-readable storage medium. Based on such understanding, the technical solution of the disclosure, or a part that contributes to the related art or a part of the technical solution may be substantially embodied in the form of a software product. The computer software product is stored in a storage medium and includes a number of instructions for enabling a computer device (which may be a personal computer, a server, or a routing node, etc.) to execute all or part of the steps of the method described in each embodiment of the disclosure. The aforementioned storage medium includes a USB disk, a mobile hard disk, a read-only memory (ROM), a random access memory (RAM), a magnetic disk or an optical disk and other media that may store program codes.

The above descriptions are only detailed embodiments of the disclosure, but the protection scope of the disclosure is not limited thereto. Any ordinary skill person in the art may easily think of changes or substitutions within the technical scope disclosed herein, which should be included in the protection scope of the disclosure. Therefore, the protection scope of the disclosure shall be based on the protection scope of the claims.

## Claims

1. A routing method, applied to a routing system comprising a first node and a second node, the method comprising:
performing a computing management control function by the first node; and
performing a computing routing function by the second node.

2. The method according to claim 1, wherein the computing management control function comprises at least one of: a computing perception function or a service scheduling function;
wherein performing the computing management control function by the first node comprises:
collecting, through the computing perception function, computing power and network information by the first node; and
performing, through the service scheduling function, service scheduling by the first node based on the computing power and network information.

3. The method according to claim 2, wherein the computing routing function comprises at least one of: a computing perception function, a service scheduling function, or a data forwarding function;
wherein performing the computing routing function by the second node comprises:
collecting, through the computing perception function, computing power and network information by the second node;
performing, through the service scheduling function, service scheduling by the second node based on the computing power and network information; and
forwarding, through the data forwarding function, a data packet by the second node based on the service scheduling.

4. The method according to claim 3, wherein the computing perception function includes at least one of: a computing power discovery function, or a computing power notification function;
wherein collecting, through the computing perception function, computing power and network information by the second node comprises:
discovering, through the computing power discovery function, computing power and network information for a third node by the second node; and
notifying, through the computing power notification function, another network node of the computing power and network information discovered by the second node, and/or collecting computing power and network information notified by another network node.

5. The method according to any one of claims 1 to 4, wherein the routing system supports at least one of: a centralized perception mode, a distributed perception mode, or a perception mode centralized and distributed in coordination.

6. The method according to claim 5, wherein the centralized perception mode is that computing power and network information is all collected by the first node.

7. The method according to claim 5, wherein the distributed perception mode is that computing power and network are all collected by the second node.

8. The method according to claim 5, wherein the perception mode centralized and distributed in coordination is that a first part of computing power and network information is collected by the first node, and a second part of the computing power and network information is collected by the second node.

9. The method according to claim 8, wherein the first part is static topology information of computing power and network, and the second part is dynamic real-time information of computing power and network.

10. The method according to any one of claims 1 to 4, wherein the routing system supports at least one of: a centralized scheduling mode, a distributed scheduling mode, or a scheduling mode centralized and distributed in coordination.

11. The method according to claim 10, wherein the centralized scheduling mode is that service scheduling is all performed by the first node.

12. The method according to claim 10, wherein the distributed scheduling mode is that service scheduling is all performed by the second node.

13. The method according to claim 12, wherein,
the distributed scheduling mode is performed by one second node; or
the distributed scheduling mode is performed by a plurality of second nodes in coordination.

14. The method according to claim 10, wherein the scheduling mode centralized and distributed in coordination is that service scheduling is performed by the first node and the second node in coordination.

15. The method according to claim 10, wherein for the centralized scheduling mode, the method further comprises:
when a service request is received, determining one or more destination addresses by the first node based on computing power and network information, and sending the one or more destination addresses to the second node; and
forwarding a data packet by the second node based on the one or more destinations.

16. The method according to claim 10, wherein for the distributed scheduling mode, the method further comprises:
when a service request is received, determining one or more destination addresses by the second node based on computing power and network information, and forwarding a data packet based on the one or more destinations.

17. The method according to claim 15 or 16, wherein forwarding a data packet based on the one or more destinations specifically comprises:
when one destination address is determined, forwarding the data packet to a node corresponding to the one destination address; or
when a plurality of destination addresses are determined, forwarding the data packet to a plurality of nodes corresponding to the plurality of destination addresses, and carrying a measurement message in the data packet; receiving measurement response messages returned by the plurality of nodes, selecting a destination address from the plurality of destination addresses based on measurement results carried in the measurement response messages, and forwarding the data packet to a node corresponding to the destination address selected.

18. The method according to claim 17, further comprising:
generating a routing forwarding table by the second node based on the one destination address; and forwarding subsequent data packets based on the routing forwarding table.

19. The method according to claim 17, wherein the second node supports at least one of: an addressing mode based on a service ID, an addressing mode based on an Internet Protocol (IP) address, or an addressing mode based on a service ID and an IP address.

20. The method according to claim 19, wherein when the second node supports the addressing mode based on the service ID,
determining a forwarding path by the second node based on a service ID carried in the service request, and forwarding the data packet based on the forwarding path.

21. The method according to claim 19, wherein when the second node supports the addressing mode based on the IP address,
determining a forwarding path by the second node based on an IP address carried in the service request, and forwarding the data packet based on the forwarding path.

22. The method according to claim 19, wherein when the second node supports the addressing mode based on the service ID and the IP address,
determining a forwarding path by the second node based on a service ID and an IP address carried in the service request, and forwarding the data packet based on the forwarding path.

23. A routing system, comprising:
a first node, configured to perform a computing management control function; and
a second node, configured to perform a computing routing function.

24. The system according to claim 23, wherein the computing management control function comprises at least one of: a computing perception function or a service scheduling function;
wherein the computing perception function is configured for the first node to collect computing power and network information;
wherein the service scheduling function is configured for the first node to perform service scheduling based on the computing power and network information.

25. The system according to claim 23, wherein the computing routing function comprises at least one of: a computing perception function, a service scheduling function, or a data forwarding function;
wherein the computing perception function is configured for the second node to collect computing power and network information;
wherein the service scheduling function is configured for the second node to perform service scheduling based on the computing power and network information;
wherein the data forwarding function is configured for the second node to forward a data packet based on the service scheduling.

26. The system according to claim 25, wherein the computing perception function includes at least one of: a computing power discovery function, or a computing power notification function;
wherein the computing power discovery function is configured for the second node to discover computing power and network information for a third node;
wherein the computing power notification function is configured for the second node to notify another network node of the computing power and network information discovered by the second node, and/or collect computing power and network information notified by another network node.

27. The system according to any one of claims 23 to 26, wherein the routing system supports at least one of: a centralized perception mode, a distributed perception mode, or a perception mode centralized and distributed in coordination.

28. The system according to claim 27, wherein the centralized perception mode is that computing power and network information is all collected by the first node.

29. The system according to claim 27, wherein the distributed perception mode is that computing power and network are all collected by the second node.

30. The system according to claim 27, wherein the perception mode centralized and distributed in coordination is that a first part of computing power and network information is collected by the first node, and a second part of the computing power and network information is collected by the second node.

31. The system according to claim 30, wherein the first part is static topology information of computing power and network, and the second part is dynamic real-time information of computing power and network.

32. The system according to any one of claims 23 to 26, wherein the routing system supports at least one of: a centralized scheduling mode, a distributed scheduling mode, or a scheduling mode centralized and distributed in coordination.

33. The system according to claim 32, wherein the centralized scheduling mode is that service scheduling is all performed by the first node.

34. The system according to claim 32, wherein the distributed scheduling mode is that service scheduling is all performed by the second node.

35. The system according to claim 34, wherein,
the distributed scheduling mode is performed by one second node; or
the distributed scheduling mode is performed by a plurality of second nodes in coordination.

36. The system according to claim 32, wherein the scheduling mode centralized and distributed in coordination is that service scheduling is performed by the first node and the second node in coordination.

37. The system according to claim 32, wherein for the centralized scheduling mode,
the first node is configured to when a service request is received, determine one or more destination addresses based on computing power and network information, and send the one or more destination addresses to the second node; and
the second node is configured to forward a data packet based on the one or more destinations.

38. The system according to claim 32, wherein for the distributed scheduling mode,
the second node is configured to when a service request is received, determine one or more destination addresses based on computing power and network information, and forward a data packet based on the one or more destinations.

39. The system according to claim 38, wherein the second node is specifically configured to:
when one destination address is determined, forward the data packet to a node corresponding to the destination address; or
when a plurality of destination addresses are determined, forward the data packet to nodes corresponding to the plurality of destination addresses, and carry a measurement message in the data packet; receive measurement response messages returned by the nodes, select a destination address from the plurality of destination addresses based on measurement results carried in the measurement response messages, and forward the data packet to a node corresponding to the destination address selected.

40. The system according to claim 39, wherein the second node is further configured to generate a routing forwarding table based on the destination address; and forward subsequent data packets based on the routing forwarding table.

41. The system according to claim 39, wherein the second node supports at least one of: an addressing mode based on a service ID, an addressing mode based on an Internet Protocol (IP) address, or an addressing mode based on a service ID and an IP address.

42. The system according to claim 41, wherein when the second node supports the addressing mode based on the service ID,
the second node is specifically configured to determine a forwarding path based on a service ID carried in the service request, and forward the data packet based on the forwarding path.

43. The system according to claim 41, wherein when the second node supports the addressing mode based on the IP address,
the second node is specifically configured to determine a forwarding path based on an IP address carried in the service request, and forward the data packet based on the forwarding path.

44. The system according to claim 41, wherein when the second node supports the addressing mode based on the service ID and the IP address,
the second node is specifically configured to determine a forwarding path based on a service ID and an IP address carried in a service request, and forward a data packet based on the forwarding path.

45. A node comprising: a processor and a memory for storing a computer program, wherein when the processor is configured to call and run the computer program, the method according to any one of claims 1 to 22 is executed.

46. A chip comprising: a processor, configured to call and run a computer program from a memory, so that a device equipped with the chip executes the method according to any one of claims 1 to 22.

47. A computer-readable storage medium for storing a computer program which causes a computer to execute the method according to any one of claims 1 to 22.
